# EUROPÄISCHE PATENTSCHRIFT

(11) **EP 3 768 580 B1**
(45) Veröffentlichungstag und Bekanntmachung des Hinweises auf die Patenterteilung: **30.11.2022**
(21) Anmeldenummer: 19714332.4
(22) Anmeldetag: 14.03.2019
(51) Int. Cl.: B62D 59/04, B60L 50/60

(54) **LEISTUNGSSTEUERVORRICHTUNG ZUM STEUERN EINER ELEKTRISCHEN MASCHINE IN EINEM FAHRZEUGANHÄNGER**
POWER CONTROLLER FOR CONTROLLING AN ELECTRIC MACHINE IN A VEHICLE TRAILER
DISPOSITIF DE COMMANDE DE PUISSANCE DESTINÉ À COMMANDER UNE MACHINE ÉLECTRIQUE DANS UNE REMORQUE DE VÉHICULE

(30) Priorität: 22.03.2018 DE 102018204391
(43) Veröffentlichungstag der Anmeldung: 27.01.2021
(73) Patentinhaber: Robert Bosch GmbH, 70442 Stuttgart (DE)
(72) Erfinder: KNORR, Slawa, 71543 Wuestenrot-Finsterrot (DE)
(86) Internationale Anmeldenummer: PCT/EP2019/056382
(87) Internationale Veröffentlichungsnummer: WO 2019/179866

(56) Entgegenhaltungen:
- DE-A1-102010 042 907
- US-A1- 2010 065 344
- US-A1- 2010 318 241
- US-A1- 2015 204 741

## Beschreibung

### Gebiet der Erfindung

Die Erfindung betrifft eine Leistungssteuervorrichtung zum Steuern einer elektrischen Maschine in einem Fahrzeuganhänger.

### Stand der Technik

Fahrzeuganhänger wie zum Beispiel Wohnanhänger können von einem Zugfahrzeug gezogen werden. Der Fahrzeuganhänger verfügt oft über eine eigene Stromversorgung, beispielsweise in Form einer 12V-Batterie, welche herkömmlich von einer Stromquelle wie zum Beispiel einem Generator in dem Zugfahrzeug nachgeladen wird.

Es wurde vorgeschlagen, einen Fahrzeuganhänger mit einem leistungsfähigeren Stromspeicher, beispielsweise in Form eines Lithium-Ionen-Batterie-Pakets, zu versehen. Um diesen effizient nachladen zu können, kann in dem Fahrzeuganhänger eine elektrische Maschine vorgesehen sein. Diese elektrische Maschine kann als Generator wirken und mit einem oder mehreren Rädern des Fahrzeuganhängers gekoppelt sein, um mechanische Leistung in elektrische Leistung umwandeln zu können, sodass die elektrische Leistung zum Laden des Stromspeichers eingesetzt werden kann. Gegebenenfalls kann die elektrische Maschine auch als Motor eingesetzt werden, um mithilfe von in dem Stromspeicher gespeicherter Energie den Fahrzeuganhänger anzutreiben.

DE 10 2010 042907 A1 zeigt ein Rekuperations-System für Fahrzeuganhänger. US 2010/0065344 A1 zeigt einen selbstantreibenden, elektrischen, sich wiederaufladenden Fahrzeuganhänger. US 2010/0318241 A1 zeigt ein Fahrzeugsystem und ein Verfahren zum selektiven Koppeln von Fahrzeugen. US 2015/204741 zeigt einen Anhänger mit eigener Traktionsbatterie.

Es kann ein Bedarf daran bestehen, ein Energiemanagement bei einem von einem Zugfahrzeug gezogenen Fahrzeuganhänger, der mit einer elektrischen Maschine und gegebenenfalls einem leistungsfähigen Energiespeicher ausgestattet ist, zu verbessern.

### Offenbarung der Erfindung

Vor diesem Hintergrund werden mit dem hier vorgestellten Ansatz eine Leistungssteuervorrichtung zum Steuern einer elektrischen Maschine in einem Fahrzeuganhänger gemäß dem unabhängigen Anspruch vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung können in vorteilhafter Weise ein intelligentes Energiemanagement in einem Fahrzeuggespann ermöglichen insbesondere kann ermöglicht werden, den Stromspeicher in einem Fahrzeuganhänger mithilfe der elektrischen Maschine effizient und/oder intelligent nachladen zu können oder ihm elektrische Energie situationsgemäß zum Antreiben der elektrischen Maschine entnehmen zu können.

Gemäß einem Aspekt der Erfindung wird eine Leistungssteuervorrichtung gemäß dem Hauptanspruch vorgeschlagen, welche dazu konfiguriert ist, eine mechanische Leistungsabgabe und/oder eine mechanische Leistungsaufnahme der elektrischen Maschine in einem Fahrzeuganhänger zu steuern. Die Leistungssteuervorrichtung zeichnet sich dadurch aus, dass sie dazu konfiguriert ist, die mechanische Leistungsabgabe und/oder die mechanische Leistungsaufnahme der elektrischen Maschine abhängig von einem aktuellen Fahrzustand eines den Fahrzeuganhänger ziehenden Zugfahrzeugs zu steuern.

Ideen zu Ausführungsformen der vorliegenden Erfindung können unter anderem als auf den nachfolgend beschriebenen Gedanken und Erkenntnissen beruhend angesehen werden.

Bisher wurde eine in einem Fahrzeuganhänger vorgesehene elektrische Maschine im Regelfall betrieben, ohne Rücksicht darauf zu nehmen, in welchem Fahrzustand sich das Zugfahrzeug aktuell befindet.

Einerseits beeinflusst der Fahrzustand des den Fahrzeuganhänger ziehenden Zugfahrzeugs jedoch im Allgemeinen direkt den Fahrzustand des Fahrzeuganhängers selbst. Wenn beispielsweise das Zugfahrzeug gebremst wird, läuft der Fahrzeuganhänger auf das Zugfahrzeug in gewissem Maße auf und wird dabei mitgebremst, wobei durch das Auflaufen zusätzlich Bremsen in dem Fahrzeuganhänger aktiviert werden können, um den Bremsvorgang zu unterstützen.

Andererseits lässt sich der Fahrzustand des Zugfahrzeugs oft anhand von damit korrelierenden Messgrößen einfach messen bzw. detektieren. Im genannten Beispiel verändert sich beim Bremsen des Zugfahrzeugs durch das Auflaufen des Fahrzeuganhängers beispielsweise ein Relativabstand zwischen Zugfahrzeug und Fahrzeuganhänger. Diese Änderung des Relativabstands kann einfach gemessen bzw. detektiert werden. Alternativ werden in dem Zugfahrzeug meist ohnehin diverse elektrische Signale erzeugt, die einen Rückschluss über den aktuellen Fahrzustand liefern und die somit durch die Leistungssteuervorrichtung zum Steuern der elektrischen Maschine in dem Fahrzeuganhänger genutzt werden können.

Beispielsweise kann der Fahrzeuganhänger eine Zugdeichsel zur Anbindung an das Zugfahrzeug und zur Übertragung von Kräften zwischen dem Zugfahrzeug und dem Fahrzeuganhänger aufweisen. Die Leistungssteuervorrichtung kann in diesem Fall eine elektromechanische Sensoranordnung aufweisen, welche abhängig von einer durch die Zugdeichsel aktuell übertragenen Kraft oder abhängig von einem aktuellen Relativabstand zwischen dem Zugfahrzeug und dem Anhänger ein Sensorsignal zum Steuern der mechanischen Leistungsabgabe und/oder der mechanischen Leistungsaufnahme der elektrischen Maschine erzeugt. Mit anderen Worten kann die Zugdeichsel Zugkräfte bzw. Schubkräfte zwischen dem Zugfahrzeug und dem Fahrzeuganhänger übertragen. Dabei kann sich die Zugdeichsel in ihrer Länge ändern. Eine aktuell übertragene Zugkraft oder ein aktueller Relativabstand zwischen beispielsweise dem Schwerpunkt des Zugfahrzeugs und dem Schwerpunkt des Fahrzeuganhängers kann mithilfe geeigneter elektromechanischer Sensoranordnungen gemessen werden. Basierend auf Sensorsignalen solcher Sensoranordnungen kann dann die elektrische Maschine hinsichtlich ihrer Leistungsabgabe oder Leistungsaufnahme situationsgerecht, d.h. direkt oder indirekt abhängig von dem aktuellen Fahrzustand des Zugfahrzeugs, gesteuert werden.

Um dies zu implementieren, kann an der Zugdeichsel ein Umlenkhebel vorgesehen sein, welcher abhängig von einem Relativabstand zwischen dem Zugfahrzeug und dem Anhänger in verschiedene Orientierungen verlagert wird. Die Sensoranordnung kann das Sensorsignal abhängig von der aktuellen Orientierung des Umlenkhebels erzeugen. Anders ausgedrückt, kann an der Zugdeichsel ein Umlenkhebel angeordnet sein, der beispielsweise beim Auflaufen des Anhängers auf das Zugfahrzeug verschwenkt wird. Die Änderung der Orientierung des Umlenkhebels kann mit einer Sensoranordnung, die einen Winkelsensor aufweist, einfach gemessen werden. Dementsprechend kann erkannt werden, wenn das Zugfahrzeug relativ zum Anhänger gebremst wird und bei Erkennen einer solchen Änderung des aktuellen Fahrzustands des Zugfahrzeugs die Leistungsaufnahme der elektrischen Maschine geeignet angepasst werden, um den Anhänger geeignet abzubremsen und dabei Energie zu rekuperieren.

An dem Umlenkhebel kann hierbei eine Kraftübertragungseinrichtung angreifen, welche abhängig von einer Orientierung des Umlenkhebels eine Kraft auf eine Bremse des Fahrzeuganhängers bewirkt, mittels derer eine von der Bremse bewirkte Bremskraft gesteuert wird. Mit anderen Worten kann es sich bei dem Umlenkhebel um einen Bestandteil einer herkömmlichen Auflaufbremse handeln, bei der beim Auflaufen des Anhängers auf das Zugfahrzeug mithilfe des Umlenkhebels eine Kraftübertragungseinrichtung beispielsweise in Form eines Zugseils oder eines Gestänges betätigt wird, um Bremsen des Fahrzeuganhängers zu betätigen. Die Sensoranordnung der Leistungssteuervorrichtung kann somit in einfacher Weise in eine ohnehin an der Zugdeichsel des Anhängers vorzusehenden Mechanik integriert werden.

Gemäß einer konkreten Ausgestaltung kann die Kraftübertragungseinrichtung derart konfiguriert sein, dass bei einem Auflaufen des Fahrzeuganhängers auf das Zugfahrzeug erst dann eine von der Bremse bewirkte Bremskraft erzeugt wird, wenn der Umlenkhebel wenigstens bis zu einem Mindestorientierungswinkel umorientiert wurde. Die Sensoranordnung kann in diesem Fall das Sensorsignal abhängig von der aktuellen Orientierung des Umlenkhebels bei Orientierungswinkeln kleiner als der Mindestorientierungswinkel erzeugen. Anders ausgedrückt kann der Umlenkhebel und die mit ihm kooperierende Kraftübertragungseinrichtung einer Auflaufbremse derart konfiguriert sein, dass beim Auflaufen des Anhängers auf das Zugfahrzeug die Bremsen des Anhängers erst betätigt werden, wenn der Umlenkhebel mindestens um den Mindestorientierungswinkel verschwenkt wurde. Ein lediglich geringfügiges Auflaufen des Anhängers bewirkt zwar eine kleine Umorientierung des Umlenkhebels, dieser bleibt jedoch innerhalb eines "Totwinkels" oder Spiels, innerhalb dessen noch keine zum Aktivieren der Bremsen ausreichende Kraft über die Kraftübertragungseinrichtung bewirkt wird. Dabei kann es vorteilhaft sein, mithilfe der Sensoranordnung der Leistungssteuervorrichtung insbesondere aktuelle Änderungen der Orientierung des Umlenkhebels zu messen, solange der Orientierungswinkel kleiner als der Mindestorientierungswinkel ist, d.h., solange die Bremsen des Anhängers trotz geringen Auflaufens auf das Zugfahrzeug noch nicht betätigt werden. Auf diese Weise kann frühzeitig eine Leistungsaufnahme der elektrischen Maschine gesteigert werden, um dadurch den Anhänger weitgehend synchron mit dem Zugfahrzeug abzubremsen und gleichzeitig freiwerdende kinetische Energie effizient zu rekuperieren.

Zwischen dem Umlenkhebel und der Kraftübertragungseinrichtung kann hierbei ein Dämpfungselement angeordnet sein, welches eine Kraft zwischen dem Umlenkhebel und der Kraftübertragungseinrichtung gedämpft überträgt. Das Dämpfungselement kann hierbei eine mechanische Kopplung zwischen dem Umlenkhebel und der Kraftübertragungseinrichtung etablieren, welche einerseits ruckartige Änderungen bei der Kraftübertragung zwischen dem Anhänger und dem Zugfahrzeug weitgehend direkt an die Kraftübertragungseinrichtung weitergibt, wohingegen langsame Änderungen bei einer solchen Kraftübertragung gedämpft werden. Hierdurch kann einerseits erreicht werden, dass bei einem durch das Zugfahrzeug bewirkten plötzlichen starken Bremsvorgang die Bremsen des Anhängers mit möglichst wenig Zeitverzögerung aktiviert werden, d.h., ohne dass sich zum Beispiel der Umlenkhebel zuerst um den Mindestorientierungswinkel verlagern müsste. Andererseits kann bei einem langsam eingeleiteten Bremsvorgang eine beim Auflaufen des Anhängers bewirkte Verlagerung des Umlenkhebels detektiert werden und die Rekuperation durch die elektrische Maschine im Anhänger aktiviert werden, bevor die Bremsen des Anhängers diesen übermäßig verzögern würden.

Während bei den vorangehend erläuterten Ausführungsformen der aktuelle Fahrzustand des Zugfahrzeugs anhand von damit einhergehenden Änderungen bei der Relativposition zwischen dem Zugfahrzeug und dem Anhänger und dadurch bewirkten Änderungen an der Zugdeichsel des Anhängers detektiert wurde, kann alternativ auch vorgesehen sein, in der Leistungssteuervorrichtung eine Datenschnittstelle vorzusehen, über die Steuersignale zu empfangen sind, welche in dem Zugfahrzeug generiert werden und welche eine Information über den aktuellen Fahrzustand angeben. Mit anderen Worten werden in modernen Zugfahrzeugen meist Steuersignale generiert, mithilfe derer das Zugfahrzeug gesteuert wird bzw. die einen Rückschluss über den aktuellen Fahrzustand des Zugfahrzeugs ermöglichen. Solche Steuersignale können beispielsweise generiert werden, wenn ein Bremspedal des Zugfahrzeugs betätigt wird, wenn ein Gaspedal des Zugfahrzeugs betätigt wird, wenn ein Fahrassistenzsystem den aktuellen Fahrzustand des Zugfahrzeugs beeinflusst, etc. In der hier beschriebenen Leistungssteuervorrichtung kann eine Datenschnittstelle vorgesehen sein, über die diese Steuersignale abgegriffen werden können und somit von der Leistungssteuervorrichtung zum Steuern der Leistungsabgabe bzw. Leistungsaufnahme der elektrischen Maschine eingesetzt werden können.

Insbesondere kann die Leistungssteuervorrichtung einen Sender umfassen, welcher in dem Zugfahrzeug mit einer Fahrzeugsteuereinheit zu koppeln ist und welcher basierend auf Signalen aus der Fahrzeugsteuereinheit die Information über den aktuellen Fahrzustand generiert und an die Datenschnittstelle der Leistungssteuervorrichtung übermittelt. Ein solcher Sender kann beispielsweise in Form eines sogenannten Dongles, insbesondere eines OBD-Dongles, direkt an der Fahrzeugsteuereinheit Signale abgreifen, mit der diese den aktuellen Fahrzustand des Zugfahrzeugs steuert. Der Sender kann diese Information dann an die Datenschnittstelle der Leistungssteuervorrichtung übermitteln. Hierfür kann eine drahtgebundene oder vorzugsweise eine drahtlose Signalübermittlung eingesetzt werden.

Gemäß einer konkreten Ausgestaltung ist die Fahrzeugsteuereinheit dazu konfiguriert, ein Bremsbetätigungssignal zu erzeugen. Mit anderen Worten kann der Sender derjenigen Fahrzeugsteuereinheit des Zugfahrzeugs gekoppelt werden, welche beispielsweise registriert, dass das Bremspedal betätigt wurde und daraufhin ein Bremsbetätigungssignal erzeugt. Ein solches Bremsbetätigungssignal kann dabei bereits erzeugt werden, wenn das Bremspedal lediglich geringfügig niedergedrückt wird, sodass zwar noch keine signifikante Bremswirkung angefordert wird, allerdings bereits Bremsleuchten des Zugfahrzeugs aufgrund des Bremsbetätigungssignals aktiviert werden. Durch ein Abgreifen und Übermitteln des Bremsbetätigungssignals an die Leistungssteuervorrichtung kann diese somit bereits frühzeitig die elektrische Maschine zum Abbremsen des Anhängers und Rekuperieren ansteuern.

In einer weiteren Ausgestaltung kann die Leistungssteuervorrichtung dazu konfiguriert sein, die mechanische Leistungsabgabe und/oder die mechanische Leistungsaufnahme der elektrischen Maschine abhängig von GPS-Daten und/oder Navigationsdaten betreffend einen Fahrweg des Fahrzeuganhängers zu steuern. Anders ausgedrückt kann die Leistungssteuervorrichtung GPS-Daten und/oder Navigationsdaten nutzen, um aus diesen Rückschlüsse über einen aktuell vorherrschenden Fahrzustand des Zugfahrzeugs ableiten zu können und daraufhin die elektrische Maschine des Anhängers geeignet ansteuern zu können. Beispielsweise kann aus GPS-Daten und/oder Navigationsdaten erkennbar sein, dass sich das Gespann aktuell auf einer Gefällestrecke befindet und das Zugfahrzeug somit den Anhänger bremsen muss. Diese indirekt ableitbare Information kann die Leistungssteuervorrichtung nutzen, um mithilfe der elektrischen Maschine den Anhänger aktiv zu bremsen und dabei Energie zu rekuperieren. Gegebenenfalls kann der Anhänger sogar derart stark mittels der elektrischen Maschine gebremst werden, dass hierdurch auch das Zugfahrzeug mitgebremst wird und dessen kinetische Energie ebenfalls rekuperiert wird.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt ein Gespann mit einem Zugfahrzeug und einem Fahrzeuganhänger mit einer Leistungssteuervorrichtung gemäß einer Ausführungsform der Erfindung.
Fig. 2 zeigt Komponenten eines Fahrzeuganhängers mit einer daran vorgesehenen Leistungssteuervorrichtung gemäß einer Ausführungsform der Erfindung.
Fig. 3 zeigt Komponenten eines Fahrzeuganhängers mit einer daran vorgesehenen alternativen Leistungssteuervorrichtung gemäß einer weiteren Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

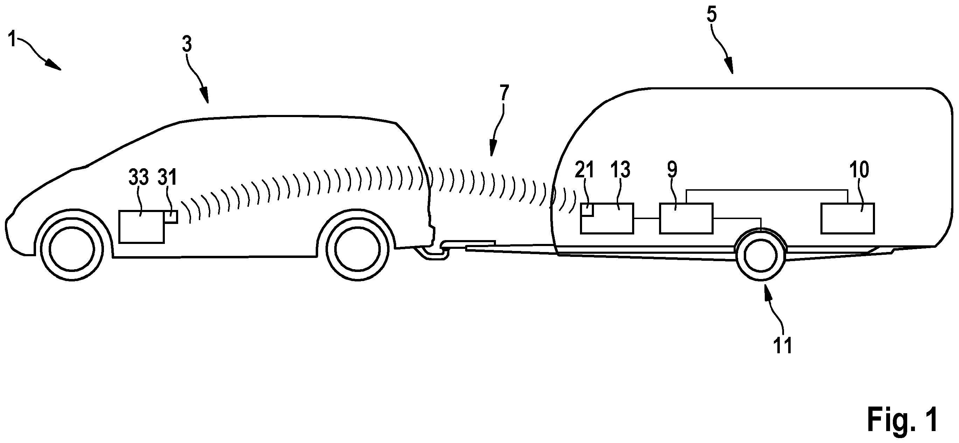

Fig. 1 zeigt ein Gespann 1 mit einem Zugfahrzeug 3 und einem Fahrzeuganhänger 5. Der Fahrzeuganhänger 5 ist über eine Zugdeichsel 7 mit dem Zugfahrzeug 3 gekoppelt. In dem Fahrzeuganhänger 5 ist eine elektrische Maschine 9 vorgesehen, die mit zumindest einem Rad 11 des Fahrzeuganhängers 5 mechanisch gekoppelt ist, um Rotationsleistung an dem Rad 11 in elektrische Leistung rekuperierend umzuwandeln oder umgekehrt durch Aufnahme elektrischer Leistung das Rad 11 anzutreiben. Rekuperierte Energie kann beispielsweise in einem Energiespeicher 10 wie einem Lithium-Ionen-Batteriepaket gespeichert werden und bei Bedarf aus diesem wieder entnommen werden.

Die elektrische Maschine 9 wird von einer Leistungssteuervorrichtung 13 hinsichtlich ihrer Leistungsaufnahme bzw. Leistungsabgabe gesteuert. Erfindungsgemäß findet dabei die Steuerung der elektrischen Maschine 9 unter Berücksichtigung eines aktuellen Fahrzustands des Zugfahrzeugs 3 statt. Um eine Information über den aktuellen Fahrzustand des Zugfahrzeugs 3 zu erhalten, können verschiedene Maßnahmen implementiert werden.

Bei einem ersten Ansatz kann die Zugdeichsel 7 modifiziert werden, um eine Information betreffend eine Relativposition zwischen dem Zugfahrzeug 3 und dem Anhänger 5 bzw. um eine Information betreffend zwischen diesen beiden übertragenen Kräften zu erhalten.

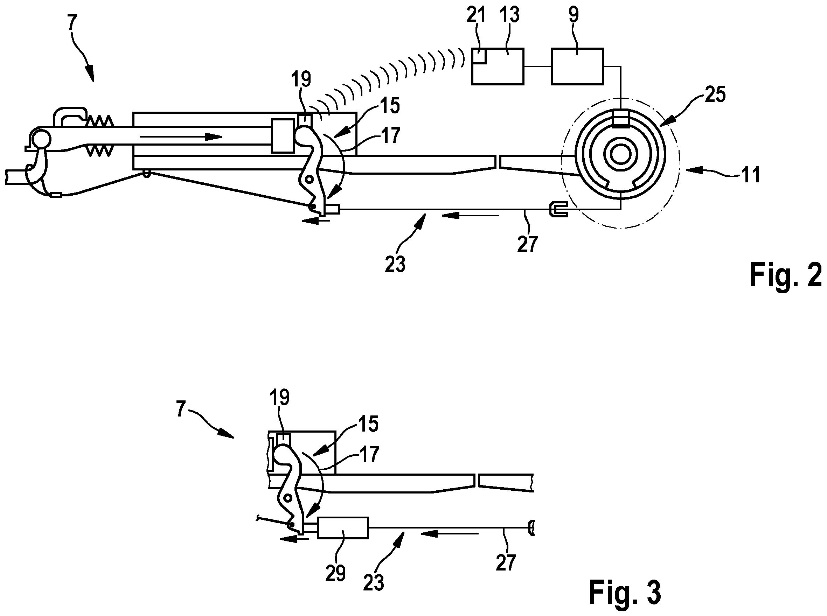

Hierzu kann, wie in Fig. 2 und 3 veranschaulicht, an der Zugdeichsel 7 ein Umlenkhebel 15 vorgesehen sein, der beim Auflaufen des Anhängers 5 auf das Zugfahrzeug 3, aufgrund der damit einhergehenden Änderung eines aktuellen Relativabstands zwischen Zugfahrzeug 3 und Anhänger 5, verschwenkt wird und somit seine Orientierung ändert, wie mit dem Pfeil 17 veranschaulicht. An dem Umlenkhebel 15 ist eine Sensoranordnung 19 vorgesehen, die abhängig von einer aktuellen Orientierung des Umlenkhebels 15 ein Sensorsignal erzeugt und dieses, vorzugsweise drahtlos, an eine Datenschnittstelle 21 der Leistungssteuervorrichtung 13 übermittelt. Das Sensorsignal gibt somit an, wie stark der Anhänger 5 beispielsweise beim Bremsen des Zugfahrzeugs 3 auf das Zugfahrzeug 3 aufläuft und ist somit ein Maß für aktuell übertragene Zugkräfte bzw. Schubkräfte oder einen aktuellen Relativabstand zwischen dem Zugfahrzeug 3 und dem Anhänger 5.

Der Umlenkhebel 15 kann dabei Teil eines Bremssystems des Anhängers 5 sein. Beim Auflaufen des Anhängers 5 auf das Zugfahrzeug 3 betätigt der Umlenkhebel 15 eine Kraftübertragungseinrichtung 23 beispielsweise in Form eines Bremszuges 27, sodass abhängig von einer Orientierung des Umlenkhebels 15 eine Kraft auf eine Bremse 25 des Anhängers 5 bewirkt wird, mittels derer die Bremskraft der Bremse 25 gesteuert wird.

Die Kraftübertragungseinrichtung 23 kann hierbei derart konfiguriert sein, dass der Umlenkhebel 15 zunächst um einen Mindestorientierungswinkel bewegt werden muss, bevor die Kraftübertragungseinrichtung 23 eine Bremskraft bei der Bremse 25 bewirkt. Beispielsweise kann der Bremszug 27 leicht lose sein, sodass der Umlenkhebel 15 zunächst ein Spiel überwinden muss, bevor der Bremszug 27 gespannt wird. Die Sensoranordnung 19 kann auch Orientierungsänderungen des Umlenkhebels 15 detektieren, die kleiner als der Mindestorientierungswinkel sind. Somit kann basierend auf den Sensorsignalen der Sensoranordnung 19 die Leistungssteuervorrichtung 13 die elektrische Maschine 9 bereits zum Rekuperieren ansteuern, bevor der Anhänger 5 signifikant auf das Zugfahrzeug 3 aufgelaufen ist und insbesondere bevor die Bremsen 25 des Anhängers 5 aktiviert werden. Kinetische Energie des Anhängers 5 kann somit sehr effizient rekuperiert werden.

Bei dem in Fig. 3 ausschnittsweise dargestellten Beispiel ist zwischen dem Umlenkhebel 15 und dem als Kraftübertragungseinrichtung 23 wirkenden Bremszug 27 ergänzend ein Dämpfungselement 29 angeordnet. Aufgrund dieses Dämpfungselements 29 kann einerseits eine mechanische Verbindung zwischen dem Umlenkhebel 15 und dem Bremszug 27 stets ohne Spiel gegeben sein und somit die mechanische Bremse 25 beispielsweise bei einem Ausfall des elektrischen Systems in dem Anhänger 5 instantan eingreifen. Andererseits kann der Umlenkhebel 15 bei langsam einsetzenden Verzögerungen des Zugfahrzeugs 3 leicht geschwenkt werden, ohne dass dies sofort zu einer Betätigung der Bremse 25 führen würde, sodass die Umorientierung des Umlenkhebels 15 von der Sensoranordnung 19 detektiert und das daraufhin generierte Sensorsignal zum Steuern der Rekuperation durch die Leistungssteuervorrichtung 13 genutzt werden kann.

In einer alternativen Ausgestaltung, wie sie in Fig. 1 angedeutet ist, kommuniziert die Datenschnittstelle 21 der Leistungssteuervorrichtung 13 mit einem Sender 31 in dem Zugfahrzeug 3. Der Sender 31 ist mit einer Fahrzeugsteuereinheit 33 gekoppelt. Die Fahrzeugsteuereinheit 33 erzeugt Signale wie beispielsweise ein Bremsbetätigungssignal, anhand derer auf den aktuellen Fahrzustand des Zugfahrzeugs 3 rückgeschlossen werden kann. Anhand solcher Signale kann der Sender 31 geeignete Informationen an die Leistungssteuervorrichtung 13 übermitteln, sodass diese die Leistungsaufnahme oder Leistungsabgabe der elektrischen Maschine 9 situationsgerecht steuern kann.

Nachfolgend werden Ausgestaltungen möglicher Ausführungsformen der Erfindung nochmals in teilweise anderslautender Wortwahl erläutert.

Fahrzeuganhänger 5 wie Wohnanhänger mit gehobener Ausstattung haben meist eine eigene 12V Batterie. Diese Batterie wird dazu benutzt um im abgekoppelten Zustand unabhängig von Zugfahrzeug und Landstrom, d.h. im Rahmen einer autarken Energieversorgung, elektrische Verbraucher zu versorgen. Diese Verbraucher sind meist Komfortverbraucher wie Beleuchtung und Wasserpumpen, aber auch Mover zum Einparken des Anhängers. Wohnanhänger werden herkömmlich aus dem Zugfahrzeug 3 während der Fahrt mit elektrischer Energie versorgt und dabei die Batterie nachgeladen. Solarzellen werden ebenfalls verwendet, um die Batterie unterstützend nachzuladen. Als Batterien werden üblicherweise 12V Bleiakkumulatoren verwendet. Der Energiegehalt dieser Batterien ist relativ gering und reicht deshalb nur für kurze autarke Phasen. Es existiert ein genormter 13-poliger Stecker als Schnittstelle zwischen Anhänger 5 und Zugfahrzeug 3. Über diesen Stecker wird auch die Batterie nachgeladen. Diese Lösung ist für 12V ausgelegt und erlaubt keine Leistungsübertragung mit einer höheren Spannungsebene von z.B. 48V. Darüber hinaus ist der Ladestrom für die 12V-Batterie im Anhänger durch die relativ geringen Kabelquerschnitte stark limitiert.

Es gibt Überlegungen, die Spannungsebene der Batterien im Anhänger zu erhöhen, z.B. auf 48V, mit dem Ziel, eine höhere Kapazität und Leistung und/oder bei geringem Gewicht zu erreichen. Als Energiequellen werden dabei Solarzellen und Rad-angetriebene elektrische Maschinen diskutiert, welche beim Bremsen generatorisch arbeiten und damit die Batterien nachladen können.

Die hier vorgeschlagene Leistungssteuervorrichtung soll eine effiziente Steuerung bzw. Regelung der generatorischen oder motorischen Leistung an Rad-angetriebenen Generatoren ermöglichen.

### Zunächst wird eine erste Implementierung erläutert:

Gebremste Anhänger 5 haben an einer Zugdeichsel 7 eine Zugstange, welche beim Bremsen einen Umlenkhebel 15 betätigt, wodurch sich eine sogenannte Zuspannkraft am Bremszug 27 einstellt und über die Radbremse 25 den Anhänger 5 abbremst.

Durch das Anbringen einer Sensoranordnung 19 mit einem Winkelsensor im Umlenkpunkt, das heißt beispielsweise an einer Achse, des Umlenkhebels 15 kann ein elektrisches Sensorsignal erzeugt werden, welches abhängig, d.h. z.B. proportional, zu einer Deichselkraft ist.

Das vom Winkelsensor erzeugte elektrische Sensorsignal wird an eine, sich vorzugsweise im Anhänger 5 befindende, Leistungssteuervorrichtung 13, beispielsweise in Form eines Steuergeräts, weitergeleitet und dort weiter verarbeitet. Die Leistungssteuervorrichtung 13 berechnet daraus ein Sollmoment bzw. eine Sollleistung und steuert die als Generator wirkende elektrische Maschine 9 entsprechend an.

Durch eine Entkopplung der Zuspannkraft von der Umlenkung (Vorspannung des Zugseils) in einem bestimmten kleinen Winkelbereich unterhalb eines Mindestorientierungswinkels kann ein bestimmter Leerlaufweg erzeugt werden. Dieser Leerlaufweg ist dadurch gekennzeichnet, dass bei geringen Umlenkungswinkeln des Umlenkhebels 15, die Radbremse 25 nicht direkt betätigt wird. Idealerweise wird dieser Leerlaufwinkel dazu benutzt um die Leistung der elektrischen Maschine 9 möglichst weitreichend auszunutzen und dabei die überschüssige kinetische Energie beim Bremsen in elektrische Energie umzuwandeln. Die mechanische Bremse 25 soll dabei möglichst inaktiv bleiben und lediglich nur bei voller Anhängerbatterie 10 oder hohen Verzögerungen bzw. beim Ausfall der elektrischen Maschine 9 zum Einsatz kommen. Diese Methode ermöglicht eine effiziente Nutzung der überschüssigen kinetischen Energie, weil diese nicht wie üblich mechanisch in der Reibbremse 25 abgebaut, sondern elektrisch rekuperiert wird.

Eine zusätzliche mechanische Entkopplung der Zuspannkraft von dem Umlenkhebel 15 im gewünschten Winkelbereich kann auch durch einen Einbau eines Dämpfers 29 wie beispielsweise eines Gasdruck-Dämpfers oder eines Öldruck-Dämpfers und/oder eines Federelements realisiert werden. Die vorgeschlagene Einbauposition ist in Fig. 3 dargestellt. Der Vorteil dieser Lösung besteht darin, dass die mechanische Verbindung bestehen bleibt und die mechanische Bremse 25 als Rückfallebene beim Ausfall des elektrischen Systems zur Verfügung steht.

Das vorgeschlagene Prinzip kann auch für eine motorische Unterstützung verwendet werden. Hier ist der Vorschlag, das Zugfahrzeug 3 über die im Anhänger 5 verbaute elektrische Maschine 9 bei ausreichend hoher elektrischer Leistung zu unterstützen bzw. zu entlasten. Dabei kann die Leistung der elektrischen Maschine 9 beispielsweise mit Hilfe des Winkelsensors in der Sensoranordnung 19 so geregelt werden, dass über die Zugdeichsel 7 keine positive Kraft in Richtung des Zugfahrzeugs entsteht, sondern die Zugstange immer auf Zug belastet bleibt und der Anhänger 5 dadurch quasi nur "leichter" wird. Dies wird dadurch ermöglicht, das beim Antreiben über den Anhänger 5 der Winkelsensor einen positiven Wert liefern würde, welcher im motorischen Betrieb nicht gewünscht ist. Als Folge würde die motorische Leistung wieder reduziert werden. Dieses Prinzip hat den Vorteil, dass das Zugfahrzeug 3 nicht vom Anhänger 5 geschoben werden kann, was aus Stabilitätsgründen des Gespanns 1 bedenklich sein kann.

### Nachfolgend wird eine zweite Implementierung erläutert:

Im obigen Vorschlag wurde beschrieben, wie die Aktivität der mechanischen Bremse 25 am Anhänger 5 vermieden werden kann und überschüssige kinetische Energie elektrisch rekuperiert werden kann. Ein zweiter Schritt in Richtung Effizienzerhöhung kann sein, die Aktivität der mechanischen Bremse am Zugfahrzeug 3 zu reduzieren bzw. in bestimmten Fahrsituationen ganz zu vermeiden.

Eine mögliche Lösung ist, weitere Informationen aus dem Zugfahrzeug 3, z.B. das Bremssignal, in das System der Leistungssteuervorrichtung 13 einzubinden. Dies kann z.B. über einen kabellosen OBD-Dongle erfolgen, welcher an einer OBD-Dose des Zugfahrzeugs 3 angeschlossen ist und die benötigten Signale an die Leistungssteuervorrichtung 13 schickt. Dies hätte den Vorteil, dass der Fahrer über eine leichte Betätigung des Bremspedals im Zugfahrzeug 3 die Rekuperation im Anhänger 5 auslösen könnte, ohne dass die mechanische Bremse 25 bereits schließt. Ein anderes Beispiel ist die Verwendung eines Gaspedalsignals, um zu vermeiden, dass beim Beschleunigen rekuperiert werden kann, sondern z.B. mithilfe der elektrischen Maschine 9 im Anhänger 5 das Zugfahrzeug 3 motorisch unterstützt wird.

Durch eine Verwendung von GPS- und Navigationsdaten (z.B. Fahrziel) kann ein intelligentes Energiemanagement für den Anhänger 5 oder aber auch für das ganze Gespann 1 realisiert werden.

Ein Gespann-übergreifendes Energiemanagement kann dadurch realisiert werden, indem z.B. bei ausreichend voller Anhängerbatterie 10 das Fahrzeugbordnetz des Zugfahrzeugs 3 über einen DCDC-Wandler und den 13-poligen Stecker versorgt werden kann und der Fahrzeuggenerator des Zugfahrzeugs 3 somit abgeschaltet werden kann.

Über verschiedene Strategien wie "möglichst effizient ankommen" oder "mit möglichst viel elektrischer Energie ankommen" sind viele Kundenbedürfnisse hiermit realisierbar.

Als ergänzende Idee wird vorgeschlagen, eine kabellose Steuereinrichtung bzw. Bedieneinheit in Reichweite des Fahrers, d.h. z.B. am Lenkrad, zu verwenden. Diese Steuereinrichtung soll vorzugsweise über kabellose Signalübertragung (z.B. Bluetooth, WLAN, o.ä.) mit einer am Anhänger 5, z.B. an der Deichsel 7, angebrachten, zweiten Einheit kommunizieren, welche als Schnittstelle 21 wiederrum mit der Leistungssteuervorrichtung 13 für die elektrische Maschine 9 elektrisch verbunden ist. Die Funktionsweise soll einem Retarder in einem LKW ähneln. Das heißt, bei einem bevorstehenden Bremsmanöver, z.B. bei einem längeren Gefälle, kann der Fahrer die Rekuperationsleistung des Anhängers 5 in mehreren Stufen manuell einstellen/vorwählen. Dies hat den Vorteil, dass für die Rekuperation nicht nur die kinetische Energie des Anhängers 5, sondern auch die des Zugfahrzeuges 3 zur Verfügung steht, die mechanische Bremse 25 geschont wird und das Gespann 1 durch die Streckwirkung stabilisiert wird. Ein weiterer Vorteil der Bedieneinheit ist, dass man durch die Integration einer visuellen Anzeige den Fahrer über einen aktuellen Rekuperationszustand, einen Ladezustand der Batterie usw. informieren kann.

Zusammenfassend können Ausführungsformen der Erfindung eine effektive Rekuperation der überschüssigen kinetischen Energie in elektrische Energie ermöglichten, da Reibverluste der mechanischen Bremse 25 minimiert werden. Es kann eine prinzipbedingte Rückfallebene beim Ausfall der generatorischen Leistung implementiert werden, da die mechanische Lösung weiterhin funktioniert. Ausführungsformen können mit geringem und kostengünstigem Integrationsaufwand umgesetzt werden, da zum Beispiel eine Deichselmechanik nicht oder nur sehr geringfügig verändert werden muss. Das hierin vorgeschlagene Prinzip kann auch für ein Unterstützen bzw. ein Entlasten des Zugfahrzeugs 3 eingesetzt werden. Insgesamt ist ein intelligentes Energiemanagement in dem Gespann 1 möglich. Dies ermöglicht eine CO₂-Einsparung durch Stützung des Fahrzeugbordnetzes und Selbstversorgung des Wohnwagens.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Leistungssteuervorrichtung (13) zum Steuern einer elektrischen Maschine (9) in einem Fahrzeuganhänger (5), wobei die elektrische Maschine (9) mit zumindest einem Rad (11) des Fahrzeuganhängers (5) gekoppelt ist, um mechanische Rotationsleistung an dem Rad (11) und elektrische Leistung an der elektrischen Maschine (9) ineinander umwandeln zu können;
wobei die Leistungssteuervorrichtung (13) dazu konfiguriert ist, eine mechanische Leistungsabgabe und/oder eine mechanische Leistungsaufnahme der elektrischen Maschine (9) zu steuern;
wobei die Leistungssteuervorrichtung (13) dazu konfiguriert ist, die mechanische Leistungsabgabe und/oder die mechanische Leistungsaufnahme der elektrischen Maschine (9) abhängig von einem aktuellen Fahrzustand eines den Fahrzeuganhänger (5) ziehenden Zugfahrzeugs (3) zu steuern, wobei der Fahrzeuganhänger (5) eine Zugdeichsel (7) zur Anbindung an das Zugfahrzeug (3) und zur Übertragung von Kräften zwischen dem Zugfahrzeug (3) und dem Fahrzeuganhänger (5) aufweist,
wobei die Leistungssteuervorrichtung (13) eine elektromechanische Sensoranordnung (19) aufweist, welche abhängig von einer durch die Zugdeichsel (7) aktuell übertragenen Kraft oder abhängig von einem aktuellen Relativabstand zwischen dem Zugfahrzeug (3) und dem Anhänger (5) ein Sensorsignal zum Steuern der mechanischen Leistungsabgabe und/oder der mechanischen Leistungsaufnahme der elektrischen Maschine (9) erzeugt,
**dadurch gekennzeichnet, dass**
an der Zugdeichsel (7) ein Umlenkhebel (15) vorgesehen ist, welcher abhängig von einem Relativabstand zwischen dem Zugfahrzeug (3) und dem Anhänger (5) in verschiedene Orientierungen verlagert wird, wobei die Sensoranordnung (19) das Sensorsignal abhängig von der aktuellen Orientierung des Umlenkhebels (15) erzeugt.

2. Leistungssteuervorrichtung nach Anspruch 1, wobei an dem Umlenkhebel (15) eine Kraftübertragungseinrichtung (23) angreift, welche abhängig von einer Orientierung des Umlenkhebels (15) eine Kraft auf eine Bremse (25) des Fahrzeuganhängers (5) bewirkt, mittels derer eine von der Bremse (25) bewirkte Bremskraft gesteuert wird.

3. Leistungssteuervorrichtung nach Anspruch 2, wobei die Kraftübertragungseinrichtung (23) derart konfiguriert ist, dass bei einem Auflaufen des Fahrzeuganhängers (5) auf das Zugfahrzeug (3) erst dann eine von der Bremse (25) bewirkte Bremskraft erzeugt wird, wenn der Umlenkhebel (15) wenigstens bis zu einem Mindestorientierungswinkel umorientiert wurde, und wobei die Sensoranordnung (19) das Sensorsignal abhängig von der aktuellen Orientierung des Umlenkhebels (15) bei Orientierungswinkeln kleiner als der Mindestorientierungswinkel erzeugt.

4. Leistungssteuervorrichtung nach Anspruch 2 oder 3, wobei zwischen dem Umlenkhebel (15) und der Kraftübertragungseinrichtung (23) ein Dämpfungselement (29) angeordnet ist, welches eine Kraft zwischen dem Umlenkhebel (15) und der Kraftübertragungseinrichtung (23) gedämpft überträgt.

5. Leistungssteuervorrichtung nach einem der vorangehenden Ansprüche, wobei die Leistungssteuervorrichtung (13) eine Datenschnittstelle (21) aufweist, über die Steuersignale zu empfangen sind, welche in dem Zugfahrzeug (3) generiert werden und welche eine Information über den aktuellen Fahrzustand angeben.

6. Leistungssteuervorrichtung nach Anspruch 5, wobei die Leistungssteuervorrichtung (13) einen Sender (31) umfasst, welcher in dem Zugfahrzeug (3) mit einer Fahrzeugsteuereinheit (33) zu koppeln ist und welcher basierend auf Signalen aus der Fahrzeugsteuereinheit (33) die Information über den aktuellen Fahrzustand generiert und an die Datenschnittstelle (21) der Leistungssteuervorrichtung (13) übermittelt.

7. Leistungssteuervorrichtung nach Anspruch 6, wobei die Fahrzeugsteuereinheit (33) ein Bremsbetätigungssignal erzeugt.

8. Leistungssteuervorrichtung nach einem der vorangehenden Ansprüche, wobei die Leistungssteuervorrichtung (13) dazu konfiguriert ist, die mechanische Leistungsabgabe und/oder die mechanische Leistungsaufnahme der elektrischen Maschine (9) abhängig von GPS-Daten und/oder Navigationsdaten betreffend einen Fahrweg des Fahrzeuganhängers (5) zu steuern.

## Claims

1. Power control apparatus (13) for controlling an electric machine (9) in a vehicle trailer (5), the electric machine (9) being coupled to at least one wheel (11) of the vehicle trailer (5) in order to be able to convert mechanical rotation power at the wheel (11) and electric power at the electric machine (9) into one another;
wherein the power control apparatus (13) is configured to control a mechanical power delivery and/or a mechanical power consumption of the electric machine (9); wherein
the power control apparatus (13) is configured to control the mechanical power delivery and/or the mechanical power consumption of the electric machine (9) on the basis of a present driving state of a towing vehicle (3) towing the vehicle trailer (5),
wherein the vehicle trailer (5) has a drawbar (7) for connection to the towing vehicle (3) and for transmitting forces between the towing vehicle (3) and the vehicle trailer (5),
wherein the power control apparatus (13) has an electromechanical sensor arrangement (19) that takes a force currently transmitted by the drawbar (7) or takes a present relative distance between the towing vehicle (3) and the trailer (5) as a basis for generating a sensor signal for controlling the mechanical power delivery and/or the mechanical power consumption of the electric machine (9),
**characterized in that**
there is provision on the drawbar (7) for a deflection lever (15) that is displaced into different orientations on the basis of a relative distance between the towing vehicle (3) and the trailer (5), wherein the sensor arrangement (19) generates the sensor signal on the basis of the present orientation of the deflection lever (15).

2. Power control apparatus according to Claim 1, wherein a force transmission device (23) engages with the deflection lever (15), said force transmission device taking an orientation of the deflection lever (15) as a basis for producing a force on a brake (25) of the vehicle trailer (5) that is used to control a braking force produced by the brake (25).

3. Power control apparatus according to Claim 2, wherein the force transmission device (23) is configured in such a way that if the vehicle trailer (5) runs into the towing vehicle (3) a braking force produced by the brake (25) is generated only when the deflection lever (15) has been reoriented at least by as much as a minimum orientation angle, and wherein the sensor arrangement (19) generates the sensor signal on the basis of the present orientation of the deflection lever (15) for orientation angles less than the minimum orientation angle.

4. Power control apparatus according to Claim 2 or 3, wherein the deflection lever (15) and the force transmission device (23) have a damping element (29) arranged between them that transmits a force between the deflection lever (15) and the force transmission device (23) in damped fashion.

5. Power control apparatus according to one of the preceding claims, wherein the power control apparatus (13) has a data interface (21) via which control signals can be received that are generated in the towing vehicle (3) and that provide information about the present driving state.

6. Power control apparatus according to Claim 5, wherein the power control apparatus (13) comprises a transmitter (31) that can be coupled to a vehicle control unit (33) in the towing vehicle (3) and that takes signals from the vehicle control unit (33) as a basis for generating the information about the present driving state and transferring said information to the data interface (21) of the power control apparatus (13) .

7. Power control apparatus according to Claim 6, wherein the vehicle control unit (33) generates a brake actuation signal.

8. Power control apparatus according to one of the preceding claims, wherein the power control apparatus (13) is configured to control the mechanical power delivery and/or the mechanical power consumption of the electric machine (9) on the basis of GPS data and/or navigation data relating to a route of the vehicle trailer (5).

## Revendications

1. Dispositif de commande de puissance (13) permettant de commander une machine électrique (9) dans une remorque de véhicule (5), la machine électrique (9) étant couplée à au moins une roue (11) de la remorque de véhicule (5) afin de pouvoir convertir une puissance de rotation mécanique au niveau de la roue (11) en une puissance électrique au niveau de la machine électrique (9) et inversement ;
dans lequel le dispositif de commande de puissance (13) est configuré pour commander puissance mécanique débitée et/ou une puissance mécanique absorbée de la machine électrique (9) ;
dans lequel le dispositif de commande de puissance (13) est configuré pour commander la puissance mécanique débitée et/ou la puissance mécanique absorbée de la machine électrique (9) en fonction d'un état de conduite actuel d'un véhicule tracteur (3) tractant la remorque de véhicule (5),
dans lequel la remorque de véhicule (5) présente une barre d'attelage (7) pour le raccordement au véhicule tracteur (3) et pour la transmission de forces entre le véhicule tracteur (3) et la remorque de véhicule (5),
dans lequel le dispositif de commande de puissance (13) présente un agencement de capteur électromécanique (19) qui génère en fonction d'une force actuellement transmise par la barre d'attelage (7) ou en fonction d'une distance relative actuelle entre le véhicule tracteur (3) et la remorque (5) un signal de capteur pour commander la puissance mécanique débitée et/ou la puissance mécanique absorbée de la machine électrique (9) ,
**caractérisé en ce qu'**un levier de renvoi (15) est prévu au niveau de la barre d'attelage (7), qui est déplacé dans différentes orientations en fonction d'une distance relative entre le véhicule tracteur (3) et la remorque (5), l'agencement de capteur (19) générant le signal de capteur en fonction de l'orientation actuelle du levier de renvoi (15).

2. Dispositif de commande de puissance selon la revendication 1, dans lequel un dispositif de transmission de force (23) attaque au niveau du levier de renvoi (15) et exerce en fonction d'une orientation du levier de renvoi (15) une force sur un frein (25) de la remorque de véhicule (5) qui permet de commander une force de freinage exercée par le frein (25).

3. Dispositif de commande de puissance selon la revendication 2, dans lequel le dispositif de transmission de force (23) est configuré de telle sorte que si la remorque de véhicule (5) tamponne le véhicule tracteur (3), une force de freinage exercée par le frein (25) n'est générée que si le levier de renvoi (15) a été réorienté au moins jusqu'à un angle d'orientation minimal, et dans lequel l'agencement de capteur (19) génère le signal de capteur en fonction de l'orientation actuelle du levier de renvoi (15) pour des angles d'orientation inférieurs à l'angle d'orientation minimal.

4. Dispositif de commande de puissance selon la revendication 2 ou 3, dans lequel un élément d'atténuation (29) qui transmet de manière atténuée une force entre le levier de renvoi (15) et le dispositif de transmission de force (23) est disposé entre le levier de renvoi (15) et le dispositif de transmission de force (23).

5. Dispositif de commande de puissance selon l'une quelconque des revendications précédentes, dans lequel le dispositif de commande de puissance (13) présente une interface de données (21) qui permet de recevoir des signaux de commande qui sont générés dans le véhicule tracteur (3) et qui indiquent une information concernant l'état de conduite actuel.

6. Dispositif de commande de puissance selon la revendication 5, dans lequel le dispositif de commande de puissance (13) comprend un émetteur (31) destiné à être couplé dans le véhicule tracteur (3) à une unité de commande de véhicule (33) et qui génère sur la base de signaux provenant de l'unité de commande de véhicule (33) l'information concernant l'état de conduite actuel et le transmet à l'interface de données (21) du dispositif de commande de puissance (13).

7. Dispositif de commande de puissance selon la revendication 6, dans lequel l'unité de commande de véhicule (33) génère un signal d'actionnement de frein.

8. Dispositif de commande de puissance selon l'une quelconque des revendications précédentes, dans lequel le dispositif de commande de puissance (13) est configuré pour commander la puissance mécanique débitée et/ou la puissance mécanique absorbée de la machine électrique (9) en fonction de données GPS et/ou de données de navigation concernant un itinéraire de la remorque de véhicule (5).
